# EUROPEAN PATENT SPECIFICATION

(11) **EP 1 232 633 B1**
(45) Date of publication and mention of the grant of the patent: **19.11.2008**
(21) Application number: 00972922.9
(22) Date of filing: 25.10.2000
(51) Int. Cl.: H04M 1/00

(54) **MOBILE PHONE**
MOBILTELEFON
TELEPHONE MOBILE

(30) Priority: 26.10.1999 FI 992309
(43) Date of publication of application: 21.08.2002
(73) Proprietor: Nokia Corporation, 02150 Espoo (FI)
(72) Inventor: HÄRMÄ, Esa, FIN-24240 Salo (FI)
(74) Representative: Saijonmaa, Olli-Pekka
(86) International application number: PCT/FI2000/000920
(87) International publication number: WO 2001/031893

(56) References cited:
- EP-A2- 0 898 405
- EP-A2- 0 930 770
- WO-A1-99/52259
- WO-A2-97/26744
- DE-A1- 19 736 675

## Description

The invention relates to a mobile phone comprising a camera.

More and more often mobile phones include a camera that enables capturing still pictures and video clips, as well as their use in video conferences.

Said requirements set for the camera and viewfinder are contradictory, because when capturing still pictures or capturing video clips, the capturing direction of the camera points away from the user, whereas in a video conference, the capturing direction of the camera is towards the user. Moreover, a usage of this type sets many requirements for the camera provided in the mobile phone; for instance, it must be light in weight, small in size, economical in expenses, and it must have a good picture quality.

Said requirements have been attempted to meet for example in video cameras by providing them with a turnable member that allows for the use of the camera for filming both the user and the surroundings. However, the camera must be turned in order to change the capturing direction.

Another way to solve the problem is to provide the camera with an optical system (a mirror or a prism), in which case it is possible to capture in two opposite directions. However, this kind of arrangement takes up a lot of space and requires high-class optics. Moreover, the system is sensitive and does not tolerate rough treatment.

As a prior art document EP-A2-0 930 770 discloses a portable cellular phone that includes one camera. This camera can be rotated through 180 degrees in a vertical or horizontal direction. This camera can be used to perform a photographing operation through use of a signal from the called/calling party and send the image information acquired by the digital camera in response to the signal received from the called/calling party.

Thus the object of the invention is a mobile phone that enables capturing still pictures and video clips, for instance in a video conference, in a versatile and easily applicable fashion. Another object of the invention is to realise an apparatus that includes only few movable parts and endures rough treatment.

These objects are now achieved in a way specified in the appended claims. The mobile phone according to the invention is characterised in that in addition to a first camera, it comprises a second camera having a capturing direction at an angle of 90-180° with respect to the capturing direction of the first camera, and in that it comprises a display with a given direction of display, said direction of display being the same as the capturing direction of the first camera and that the display is arranged to show simultaneously the images of the first camera and the second camera.

According to a preferred embodiment of the invention, the capturing direction of the second camera is essentially at an angle of 90 - 180° with respect to the capturing direction of the first camera. Advantageously the cameras are arranged on opposite sides of the mobile phone, so that the capturing direction of at least one camera can be adjusted without moving the mobile phone. Thus the mobile phone according to the invention makes it possible to take still pictures and capture video clips simultaneously in opposite directions. Moreover, the mobile phone according to the invention includes only a few movable parts, wherefore it endures even rougher treatment.

Moreover, the mobile phone according to the invention advantageously comprises a display with a given display direction, said direction being the same as the capturing direction of the first camera. In case the user holds the mobile phone in a position where he can watch the picture shown in the display, it is simultaneously possible to film the user with the first camera. Said display can be for instance a liquid crystal display; advantageously the display is flat.

Said display can also be arranged to function as a viewfinder, so that it shows the picture captured by the second camera On the other hand, the display can be arranged to show the image captured by the first camera, or the display can be arranged to show simultaneously the images captured by both the first and the second camera. In case the mobile phone also is provided with means for image processing in order to diminish the image captured by the first camera in relation to the image captured by the second camera, on the display there is created a so-called split-screen image, where for instance the image of the user is diminished in a corner of the display, and the rest of the display shows the image captured by the second camera, or images of other participants of the video conference. It also is possible to show an image where for example four participants of a video conference, all in different places, are shown simultaneously on the display.

According to a preferred embodiment of the invention, the mobile phone also comprises a pattern recognition system in order to process the image created by the first and/or the second camera. Moreover, the mobile phone can be arranged to create an image, part of which is a partial image produced by a pattern recognition system, for example a split-screen image described above. Naturally the image processing system and the pattern recognition system can be designed according to methods known in the prior art.

In addition to this, according to a preferred embodiment of the invention, the first camera has a first angle of view which is essentially smaller than the second angle of view of the second camera. Thus the first camera can be used for capturing the target, generally the user, close by, for example from the distance of 20 cm, whereas the second camera produces a sharp image from a further distance.

Moreover, the camera according to the mobile phone of the invention can be provided with an arrangement that enables the adjusting of the angles of view of the cameras, i.e. zooming. These arrangements are known as such from ordinary cameras.

In the mobile phone according to the invention, there can further be added an arrangement that enables the use of the cameras provided in the mobile phone, for example by using a table as a support. Said arrangement can be for example a separate folding rack, or integrated telescoping feet. By means of the arrangement, it is possible to turn one or both cameras of the mobile phone for instance towards the face of the user sitting at the table.

Likewise, one or both cameras of the mobile phone can be detachable from the mobile phone, in which case their connection to the mobile phone can be arranged either by means of wires or in a wireless fashion. This further increases the possibilities for using the cameras.

One embodiment of the mobile phone according to the invention also comprises an optical viewfinder with a direction of use equal to the capturing direction of one of the cameras. Here an optical viewfinder means an arrangement that permeates and aligns rays of light, as well as outlines the view to be seen through the arrangement in question, so that said view gives a good impression of the image created by the camera included in the mobile phone. The direction of use of the optical viewfinder here means the direction in which the viewfinder is arranged to function. The use of an optical viewfinder is generally known for users of ordinary cameras, i.e. the threshold to the use of a mobile phone according to the invention is low. Moreover, the display can be switched off while using the optical viewfinder, which cuts down the power consumption. A low power consumption is an essential feature in mobile phone components.

In the simplest form, an optical viewfinder can be a hole of a certain size, extending through the mobile phone, or it may include lenses, mirrors and other elements known as such, for instance those used in ordinary cameras. In connection with the optical viewfinder, there can be arranged various indicators, such as arms, or signal lights with different designs, in order to describe the operation of the mobile phone As an example, let us mention a signal light indicating the state of the battery.

For a man skilled in the art, it is obvious that the mobile phone according to the invention can be used for capturing both still pictures and video clips.

The invention is explained in more detail with respect to the appended drawings, wherein
- figures 1a and 1b: illustrate a mobile phone according to a first embodiment of the invention, viewed at the front and at the rear,
- figure 2: illustrates the basic principle of operation of a second embodiment according to the invention,
- figures 3 a and 3b: illustrate various possibilities for using the mobile phones according to the different embodiments of the invention,
- figure 4: is a block diagram illustrating the operation of the mobile phones according to a preferred embodiment of the invention, and
- figures 5a and 5b: illustrate a mobile phone according to a third embodiment of the invention, viewed at the front and at the rear.

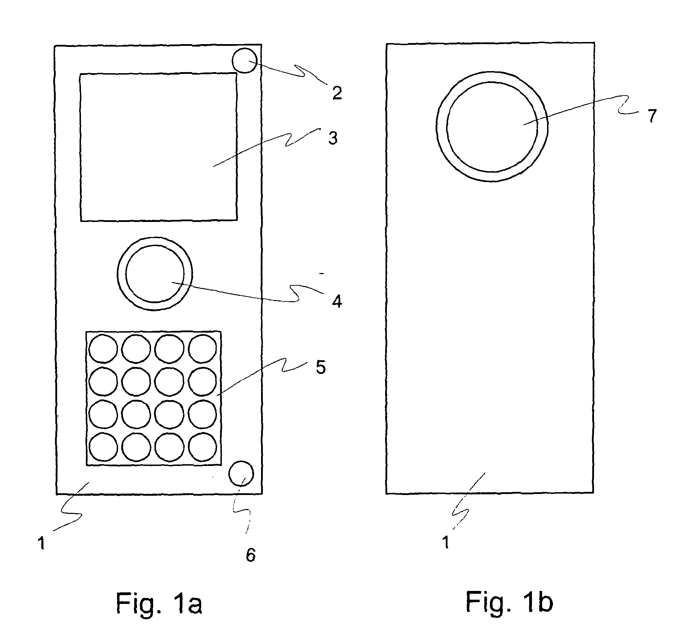

Figure 1a is a schematical illustration of a mobile phone according to the first embodiment of the invention, seen at the front. On the front side of the mobile phone 1, i.e. on the side that faces the user when operating the device, there is arranged a loudspeaker 2, a display 3, a first camera 4, a keypad 5 and a microphone 6. Obviously the first camera 4 may also be located in some other place in the mobile phone 1, for example behind the display 3, so that in the display 3, there is arranged an aperture for the lens of the first camera 4. Likewise, the other elements can also be arranged in an order different from the one illustrated in the drawing.

Figure 1b is a schematical illustration of the mobile phone 1 according to the first embodiment of the invention, viewed at the rear. In this preferred embodiment, the second camera 7 of the mobile phone 1 is installed on the opposite side of the mobile phone with respect to the first camera 4.

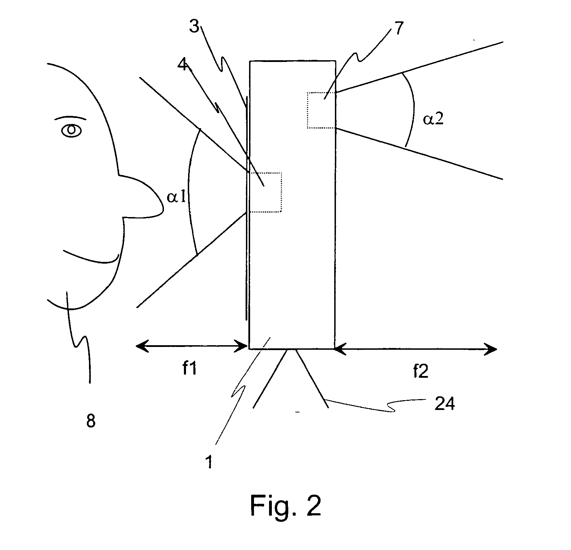

Figure 2 is a schematical illustration of the basic principle of operation of the mobile phone according to a second preferred embodiment of the invention. There is shown a mobile phone 1, viewed at the side, and the display 3 of the mobile phone 1, a first camera 4, located behind the display 3, a second camera 7 and a mobile phone user 8. The user 8 faces the front of the mobile phone 1, i.e. the first camera 4 and the display 3. Preferably the first camera has such features that it produces a sharp image while capturing at a short distance, for instance from about 10 - 100 cm. This distance is marked as f1. A particular advantage of the first camera 4 is a wide angle of view α1. Respectively, the second camera 7 according to the invention is preferably of a type that can produce a sharp image while capturing from an essentially longer distance than the first camera 4, typically from about 50 - 300 cm. This distance is marked as f2. A particular advantage in the second camera 7 is a narrower angle of view α2 than in the first camera 4. Further, the illustration shows the foldable support legs 24, on which the mobile phone can be supported, for instance on a table.

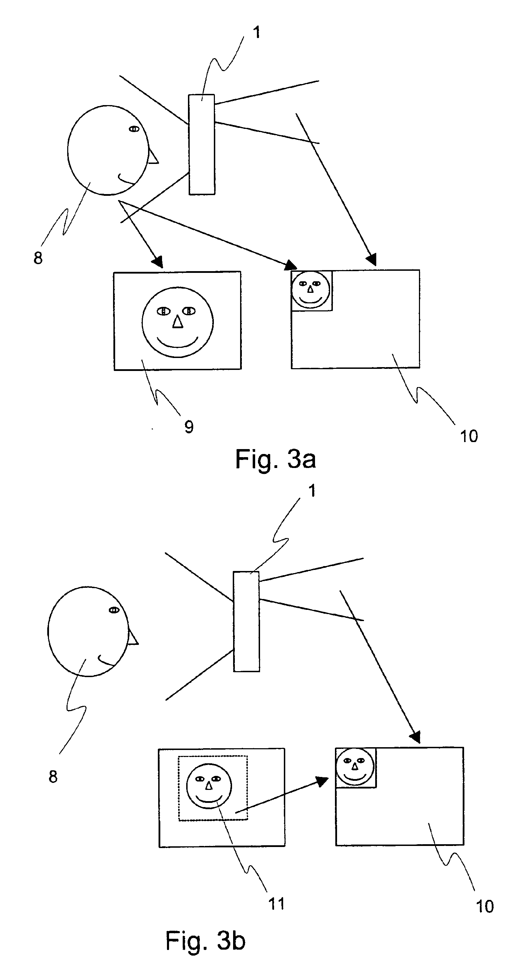

Figure 3a is a schematical illustration of a possibility for using the mobile phone according to a preferred embodiment of the invention, i.e. for showing a simple split screen image. In the usage illustrated in the drawing, the first camera is directed towards the user 8, so that the user is placed near the mobile phone 1. On the display, there can be seen an essentially screen-size image 9 of the user, or an image 10, where the user's image is seen as a smaller picture in addition to the image captured by the other camera. i.e. on the display there is seen a split-screen image composed of the images of the first and second camera.

Figure 3b is a schematical illustration of a usage of a mobile phone according to another preferred embodiment of the invention, i.e. the showing of a split-screen image by utilising pattern recognition. In this type of usage, by means of a prior art pattern recognition method, in the image captured by the first camera there is recognised the face 11, which can thus be shown in a smaller scale in the image 10, over the image captured by the second camera. Owing to the pattern recognition method, the camera user 1 can move further from the mobile phone camera and/or the mobile phone can be moved and inclined, and the user's image can still be shown in the split-screen image 10.

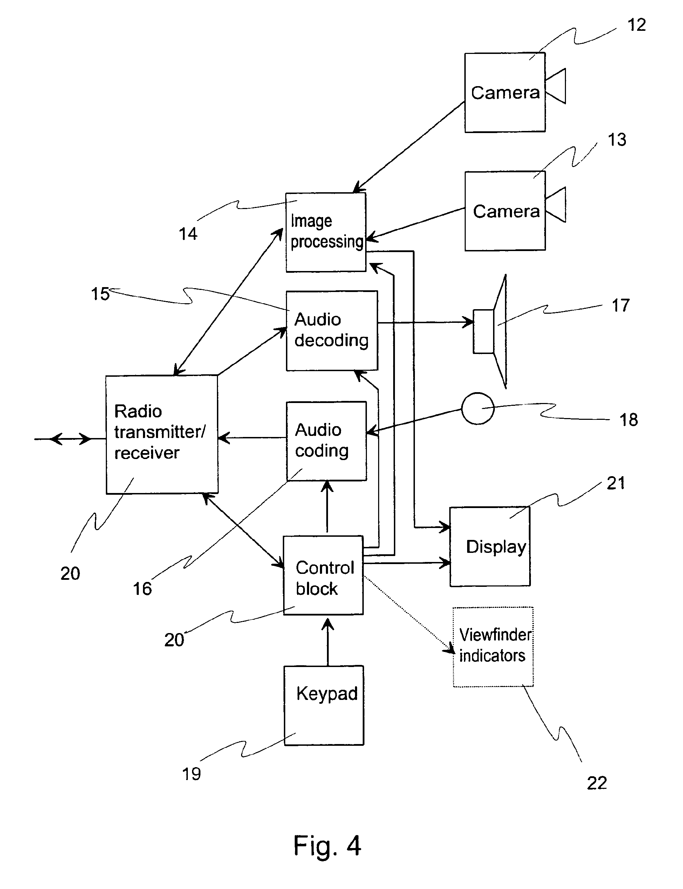

Figure 4 represents a block diagram of the operation of a mobile phone according to a preferred embodiment of the invention. The cameras 12, 13 produce digital images, which are transferred to an image processing block 14. The audio decoding 15, audio encoding 16, the loudspeaker 17 and the microphone 18 all function as in known mobile phones. Likewise, the keypad 19 functions, in similar fashion as in prior art mobile phones, by means of a control block 25. The radio transmitter/receiver 20 also functions as in known mobile phones.

The control block 25 may define the image processing block 14 in many ways. For instance, the control block 25 can show on the display 21 an image captured by the camera 12 or the camera 13 or both, or it can combine on the display 21 an image produced by the camera 12 or the camera 13 or both with an image received by radio by the radio receiver 25. The control block 25 may also process said images in different ways, for example diminish, enlarge or produces split-screen images. Moreover, the control block 25 controls the possible indicators 22 of the possible viewfinder.

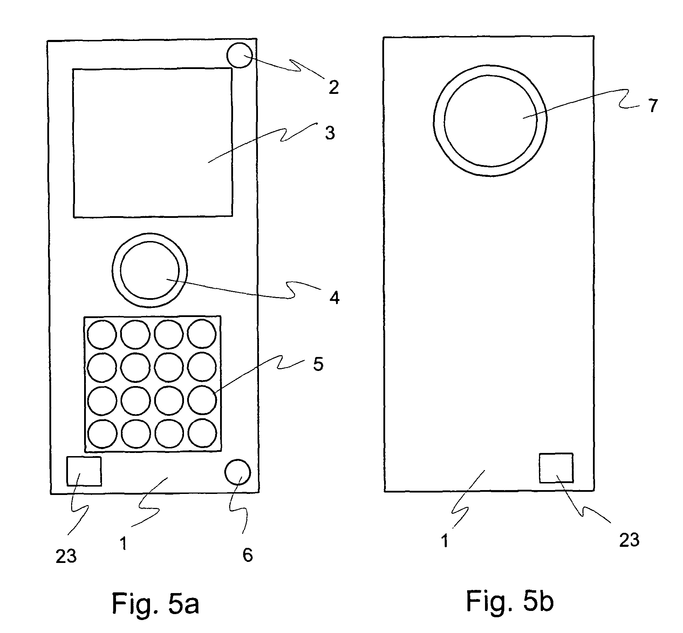

Figure 5a is a schematical illustration of a mobile phone 1 according to a third embodiment of the invention, seen at the front. On the front side of the mobile phone, i.e. on the side that faces the user while operating, there is a loudspeaker 2, a display 3, a first camera 4, a keypad 5, a microphone 6 and an optical viewfinder 23. Obviously the first camera 4 may be located in some other spot of the mobile phone, for instance behind the display 3, so that in the display 3, there is provided an aperture for the lens of the camera 4. The rest of the elements can likewise be arranged in some other order than the one illustrated in the drawing.

Figure 5b is a schematical illustration of a mobile phone 1 according to a third embodiment of the invention, viewed at the back. In this preferred embodiment, the second camera 7 of the mobile phone 1 is placed on the opposite side of the mobile phone with respect to the first camera 4. There is further illustrated an optical viewfinder 23.

## Claims

1. A mobile phone comprising a first camera (4), **characterised in that** it further comprises a second camera (7) having a capturing direction at an angle of 90 - 180° with respect to the capturing direction of the first camera (4), and **in that** it comprises a display (3) with a given direction of display, said direction of display being the same as the capturing direction of the first camera (4) and that the display (3) is arranged to show simultaneously the images of the first camera (4) and the second camera (7).

2. A mobile phone according to claim 1, **characterised in that** the display (3) is arranged to function as a viewfinder by showing the image captured by the second camera (7).

3. A mobile phone according to claim 1, **characterised in that** the display (3) is arranged to show the image captured by the first camera (4).

4. A mobile phone according to claim 1, **characterised in that** it comprises image processing means for diminishing the image produced by the first camera (4) with respect to the image produced by the second camera (7).

5. A mobile phone according to claim 1, **characterised in that** it comprises a pattern recognition system for processing the image produced by the first (4) and/or second camera (7).

6. A mobile phone according to claim 5, **characterised in that** it is arranged to create an image, part of which is the split image produced by the pattern recognition system.

7. A mobile phone according to claim 1, **characterised in that** the first camera (4) has the first angle of view and the second camera (7) has a second angle of view, which is essentially smaller than that of the first camera.

8. A mobile phone according to claim 1, **characterised in that** it comprises an optical viewfinder (23) with the same operating direction as the capturing direction of one of the cameras (4, 7).

9. A mobile phone according to claim 1, **characterised in that** it comprises an arrangement (24) for supporting the mobile phone on an essentially horizontal, planar surface.

10. A mobile phone according to claim 1, **characterised in that** the display (3) is a liquid crystal display.

## Patentansprüche

1. Mobiltelefon, umfassend eine erste Kamera (4),
**dadurch gekennzeichnet, dass**
es weiter eine zweite Kamera (7) mit einer Aufnahmerichtung in einem Winkel von 90° bis 180° in Bezug auf die Aufnahmerichtung der ersten Kamera (4) aufweist; und
dass es eine Anzeige (3) mit einer gegebenen Anzeigerichtung aufweist, wobei die Anzeigerichtung die gleiche ist wie die Aufnahmerichtung der ersten Kamera (4); und dass die Anzeige (3) eingerichtet ist, die Bilder der ersten Kamera (4) und der zweiten Kamera (7) gleichzeitig zu zeigen.

2. Mobiltelefon nach Anspruch 1,
**dadurch gekennzeichnet, dass**
die Anzeige (3) dazu eingerichtet ist, durch Zeigen des von der zweiten Kamera (7) aufgezeichneten Bildes als Sucher zu funktionieren.

3. Mobiltelefon nach Anspruch 1,
**dadurch gekennzeichnet, dass**
die Anzeige (3) dazu eingerichtet ist, das von der ersten Kamera (4) aufgezeichnete Bild zu zeigen.

4. Mobiltelefon nach Anspruch 1,
**dadurch gekennzeichnet, dass**
es Bildverarbeitungsmittel zum Verkleinern des von der ersten Kamera (4) erzeugten Bildes in Bezug auf das von der zweiten Kamera (7) erzeugte Bild aufweist.

5. Mobiltelefon nach Anspruch 1,
**dadurch gekennzeichnet, dass**
es ein Mustererkennungssystem zum Verarbeiten des von der ersten (4) und/oder der zweiten Kamera (7) erzeugten Bildes umfasst.

6. Mobiltelefon nach Anspruch 5,
**dadurch gekennzeichnet, dass**
es eingerichtet ist, ein Bild zu erzeugen, von dem ein Teil das von dem Mustererkennungssystem erzeugte Teilbild ist.

7. Mobiltelefon nach Anspruch 1,
**dadurch gekennzeichnet, dass**
die erste Kamera (4) den ersten Bildwinkel und die zweite Kamera (7) einen zweiten Bildwinkel aufweist, der deutlich kleiner ist als der der ersten Kamera.

8. Mobiltelefon nach Anspruch 1,
**dadurch gekennzeichnet, dass**
es einen optischen Sucher (23) mit der gleichen Arbeitsrichtung wie die Aufnahmerichtung von einer der Kameras (4, 7) umfasst.

9. Mobiltelefon nach Anspruch 1,
**dadurch gekennzeichnet, dass**
es eine Anordnung (24) zum Halten des Mobiltelefons auf einer im Wesentlichen horizontalen, planaren Oberfläche umfasst.

10. Mobiltelefon nach Anspruch 1,
**dadurch gekennzeichnet, dass**
die Anzeige (3) eine Flüssigkristallanzeige ist.

## Revendications

1. Téléphone mobile comprenant une première caméra (4), **caractérisé en ce qu'**il comprend en outre une deuxième caméra (7) ayant une direction d'acquisition à un angle de 90 à 180° par rapport à la direction d'acquisition de la première caméra (4), et **en ce qu'**il comprend un affichage (3) avec une direction donnée d'affichage, ladite direction d'affichage étant la même que la direction d'acquisition de la première caméra (4) et **en ce que** l'affichage (3) est agencé pour présenter simultanément les images de la première caméra (4) et de la deuxième caméra (7).

2. Téléphone mobile selon la revendication 1, **caractérisé en ce que** l'affichage (3) est agencé pour fonctionner comme un viseur en présentant l'image acquise par la deuxième caméra (7).

3. Téléphone mobile selon la revendication 1, **caractérisé en ce que** l'affichage (3) est agencé pour présenter l'image acquise par la première caméra (4).

4. Téléphone mobile selon la revendication 1, **caractérisé en ce qu'**il comprend des moyens de traitement d'image pour diminuer l'image produite par la première caméra (4) par rapport à l'image produite par la deuxième caméra (7).

5. Téléphone mobile selon la revendication 1, **caractérisé en ce qu'**il comprend un système de reconnaissance de motif pour traiter l'image produite par la première caméra (4) et/ou par la deuxième caméra (7).

6. Téléphone mobile selon la revendication 5, **caractérisé en ce qu'**il est agencé pour créer une image dont une partie est l'image divisée produite par le système de reconnaissance de motif.

7. Téléphone mobile selon la revendication 1, **caractérisé en ce que** la première caméra (4) a le premier angle de vue et la deuxième caméra (7) a un deuxième angle de vue qui est sensiblement inférieur à celui de la première caméra.

8. Téléphone mobile selon la revendication 1, **caractérisé en ce qu'**il comprend un viseur optique (23) avec la même direction de fonctionnement que la direction d'acquisition de l'une des caméras (4, 7).

9. Téléphone mobile selon la revendication 1, **caractérisé en ce qu'**il comprend un dispositif (24) pour supporter le téléphone mobile sur une surface planaire sensiblement horizontale.

10. Téléphone mobile selon la revendication 1, **caractérisé en ce que** l'affichage (3) est un affichage à cristaux liquides.
